**Europäisches Patentamt**

**European Patent Office**

**Office européen des brevets**

(19)

(11) Veröffentlichungsnummer: **0 087 685**

**A1**

(12) ## EUROPÄISCHE PATENTANMELDUNG

(21) Anmeldenummer: **83101509.4**

(22) Anmeldetag: **17.02.83**

(51) Int. Cl.³: **B 23 K 11/30**

(30) Priorität: **18.02.82 US 349934**

(43) Veröffentlichungstag der Anmeldung:
**07.09.83 Patentblatt 83/36**

(84) Benannte Vertragsstaaten:
**DE FR GB**

(71) Anmelder: **DEERE & COMPANY**
**1 John Deere Road**
**Moline Illinois 61265(US)**

(72) Erfinder: **Dehn, Dennis Richard**
**709 Lynn Street**
**Horicon Wisconsin 53032(US)**

(74) Vertreter: **Fricke, Joachim, Dr. et al,**
**Dr. R. Döring, Dr. J. Fricke, Patentanwälte**
**Josephspitalstrasse 7**
**D-8000 München 2(DE)**

(54) Nachbearbeitungsvorrichtung zum Nachbearbeiten der Spitzen von sich gegenüberliegenden und selektiv einstellbaren Elektroden.

(57) Die vorrichtungweist ein Stütz- und Stabilisierungsglied auf, um während der Nachbearbeitung mit Hilfe der tragbaren Nachbearbeitungsvorrichtung die Vorrichtung genauer ausgerichtet stabilisieren zu können und so die Genauigkeit der Nachbearbeitung und damit die Qualität der nachträglich herzustellenden Schweißnähte zu verbessern.

FIG. 3

EP 0 087 685 A1

Croydon Printing Company Ltd.

## Nachbearbeitungsvorrichtung zum Nachbearbeiten der Spitzen von sich gegenüberliegenden und selektiv einstellbaren Elektroden

Die Erfindung betrifft eine Nachbearbeitungsvorrichtung zum Nachbearbeiten der Spitzen von sich gegenüberliegenden und selektiv einstellbaren Elektroden in deren Einbaustellung in einer Schweißmaschine, mit einem vorderen Bearbeitungsabschnitt und einem rückwärtigen Antriebsabschnitt, bei der ein rotierend antreibbares Arbeitsglied in dem Bearbeitungsabschnitt angeordnet ist.

Während des Schweißprozesses nützen sich die Elektrodenspitzen bekanntlich ab und müssen entweder ersetzt oder nachbearbeitet werden, um eine ausreichende Schweißqualität zu gewährleisten.

Es sind verschiedene tragbare Nachbearbeitungsvorrichtungen der eingangs näher bezeichneten Art bekannt und auf dem Markt, von der Fa. Aro Corporation (aus Bryan, Ohio USA) vertrieben. Die bekannten Vorrichtungen weisen einen vorderen Abschnitt auf, der ein Arbeitsglied umfaßt, um einen Halter mit darin befindlicher Bearbeitungsklinge aufzunehmen. Das Arbeitsglied erteilt dem Halter mit Klinge eine Drehbewegung. Um eine Elektrodenspitze nachzubearbeiten muß die Bedienungsperson der Maschine die Vorrichtung so halten, daß eine der Elektrodenspitzen in dem Halter aufgenommen wird und mit der Klinge in Kontakt gerät. Die Bedienungsperson kann auf diese Weise nacheinander die beiden Elektrodenspitzen nachbearbeiten.

Während dieses Vorganges ist es jedoch schwierig für die Bedienungsperson die Nachbearbeitungsvorrichtung in Verbindung mit der zugehörigen Elektrode zu halten, ohne daß bestimmte Bewegungsveränderungen oder Stellungsänderungen auftreten. Das Ergebnis ist eine ungleichmäßige Nachbearbeitung der betreffenden Elektrode. Die Folge ist eine Herabminderung der Qualität der Schweißnaht, die durch die nachbearbeitete Elektrode erzeugt wird.

Es ist Aufgabe der Erfindung eine Nachbearbeitungsvorrichtung der eingangs näher bezeichneten Art so weiterzubilden, daß diese Schwierigkeiten vermieden werden und eine wesentlich genauere Nachbearbeitung ohne besondere Aufmerksamkeit der Bedienungsperson gewährleistet ist.

Diese Aufgabe wird erfindungsgemäß gelöst durch ein Stütz- und Stabilisierungsglied, das am vorderen Betätigungsabschnitt befestigbar ist und eine Vertiefung zur sicheren Aufnahme einer Elektrodenspitze aufweist, wobei das Glied so montiert ist, daß die Vertiefung und das antreibbare Arbeitsglied gleichzeitig jeweils eine der beiden Elektrodenspitzen aufnehmen können. Das Stütz- und Stabilisierungsglied ist an dem vorderen Abschnitt der Vorrichtung gegenüber dem Arbeitsglied befestigt. Das Stütz- und Stabilisierungsglied umfaßt eine Vertiefung mit schrägen Seitenwänden, die zu einer Sitzfläche führen. Bei Betrieb nimmt der die Klinge aufnehmende Halter eine der Elektrodenspitze des Schweißapparates auf, während die andere, z.B. die obere Elektrodenspitze in der Sitzfläche des Stütz- und Stabilisierungsgliedes aufgenommen wird. Die auf dieses Glied und den Klingenhalter durch die Elektroden ausgeübten Kräfte stabilisieren den Nachbearbeitungsvorgang, indem eine stabile Verbindung mit der unteren Elektrode hergestellt wird. Durch Drehen der Vorrichtung derart, daß die obere Elektrode durch den Klingenhalter aufgenommen wird, kann auch die andere Elektrode zuverlässig und genau nachbearbeitet werden, wobei die bereits bearbeitete Elektrode von dem Stütz- und Stabilisierungsglied aufgenommen ist.

Die Anordnung kann so weitergebildet werden, daß ein Gehäuse mit einer im wesentlichen zylindrischen Kammer vorgesehen ist, die an beiden Enden offen ist, wobei das Gehäuse einen ersten Satz und einen zweiten Satz von in Querrichtung in Fluchtung stehenden Öffnungen aufweist, die in Längsrichtung im Abstand voneinander angeordnet sind und jeweils eine solche Gestalt aufweisen, daß sie eine quer durch die Kammer ragende Schneidklinge aufnehmen und deren Bewegung in Längsrichtung begrenzen können, und wobei das Gehäuse von dem antreibbaren Arbeitsglied aufnehmbar ist und sich durch dieses erstreckt, wobei weiterhin Mittel vorgesehen sind, um die radialen Bewegungen der Schneidklingen zu begrenzen.

Bei dieser Anordnung können beide Elektrodenspitzen gleichzeitig nachbearbeitet werden, wobei für beide Spitzen eine gleichförmige und sichere Abstützung und gegenseitige Zuordnung gewährleistet ist, um eine gleichförmige und genaue Nachbearbeitung zu gewährleisten.

Die Erfindung wird nachfolgend anhand schematischer Zeichnungen an mehreren Ausführungsbeispielen näher erläutert.

Es zeigen:

Figur 1 eine teilweise Seitenansicht des vorderen Bereiches einer Nachbearbeitungsvorrichtung zum Nachbearbeiten von Elektrodenspitzen gemäß der Erfindung.

Figur 2 einen Ausschnitt des vorderen Bereiches einer Nachbearbeitungsvorrichtung in abgewandelter Ausführungsform gemäß der Erfindung und

Figur 3 eine Seitenansicht der Vorrichtung in Verbindung mit oberen und unteren Elektroden eines Schweißgerätes.

Das Schweißgerät kann sich gegenüberliegende, in Fluchtung stehende Elektroden mit Spitzenabschnitten umfassen, die zur Erzeugung der eigentlichen Schweißung maßgeblich sind. Wiederholte Verwendung kann dazu führen, daß die Elektrodenspitzen abnutzen. Dadurch wird entweder eine unzulängliche Schweißnaht oder überhaupt keine richtige Schweißung verursacht. Die mögliche Lösung gegenüber der Abnutzung der Schweißspitzen besteht entweder in einem Austausch der Spitzen gegenüber neuen oder durch eine Nachbearbeitung der Spitzen. Eine Nachbearbeitung der Spitzen kann durch Verwendung eines üblichen Elektrodennachbearbeitungsgerätes erfolgen, wie diese von der eingangs benannten Firma vertrieben werden. Eine Bedienungsperson ist dabei erforderlich, um die Vorrichtung in Kontakt mit einer Elektrodenspitze zu halten.

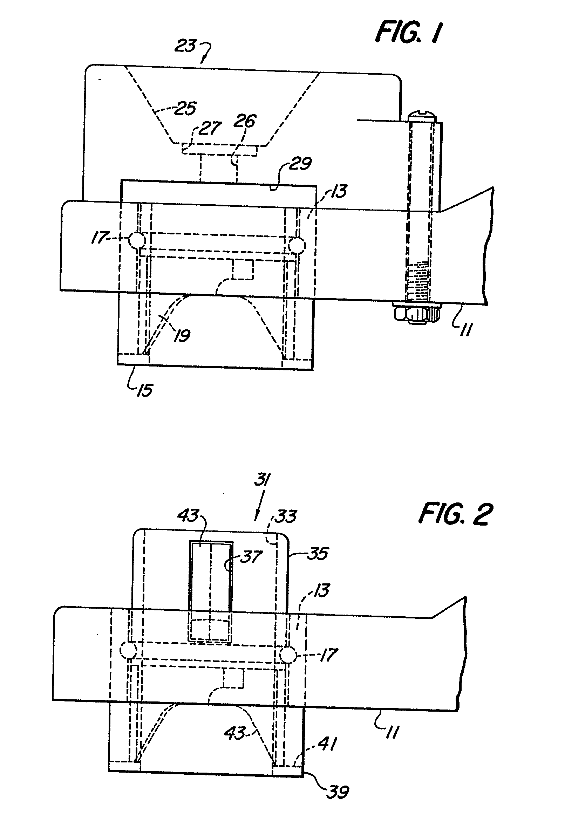

Figur 1 zeigt eine Nachbearbeitungsvorrichtung 11 mit einem vorderen Abschnitt, der ein Arbeitsglied 13 umfaßt. Dieses nimmt einen Halter 15 für eine Schneidklinge auf. Der Halter ist in dem Arbeitsglied mittels Schnapping 17 in üblicher Weise befestigt. Der Halter 15 nimmt eine Schneidklinge 19 auf. Ein Stützglied 23 ist mit üblichen Mitteln an der Vorrichtung 11 befestigt derart, daß es gegenüberliegend in Fluchtung mit dem Arbeitsglied 13 steht. Das Stütz- und Stabilisierungsglied 23 weist eine Vertiefung auf, die durch einen ersten abgeschrägten Wandabschnitt 25 gebildet wird, der zu einem flachen Abschnitt oder Sitz 27 führt. Die Vertiefung steht in Verbindung mit der Ausnehmung 29 an der Bodenseite des Stütz- und Stabilisierungsgliedes 23, und zwar über einen Durchgang 26 der so angeordnet ist, daß sich die Ausnehmung direkt über dem Arbeitsglied 13 befindet.

Bei Betrieb wird eine der Elektrodenspitzen in dem Halter 15 aufgenommen, um so in Kontakt mit der Schneidklinge 19 zu treten. Die gegenüberliegende Elektrode wird in der Ausnehmunge des Stütz- und Stabilisierungsgliedes 23 aufgenommen. Die auf die Vorrichtung 11 und das Stütz- und Stabilisierungsglied 23 ausgeübte Kraft sollte ausreichend sein, um eine genügende Stabilisierung zu gewährleisten. Die gleiche Anordnung wird nach Umdrehen verwendet zum Nachbearbeiten auch der oberen Elektrode.

Bei der alternativen Ausführungsform nach Fig. 2 ist ein Gehäuse 31 vorgesehen, das eine zylindrische Kammer 33 begrenzt. Das Gehäuse 31 weist einen ersten äußeren Abschnitt 35 auf, der so bemessen ist, daß er durch das Arbeitsglied aufgenommen wird und sich durch dieses hindurcherstreckt. Ein zweiter äußerer Abschnitt 39 des Gehäuses 31 folgt angrenzend an den ersten Abschnitt 35, um an dem Arbeitsglied 13 anzuliegen. In dem ersten Abschnitt sind in Querrichtung in Fluchtung stehende Ausnehmungen 37 vorgesehen. In gleicher Weise besitzt der zweite Abschnitt 39 in Querrichtung in Fluchtung stehende Öffnungen oder Ausnehmungen 41. Klingen 43 sind in jedem Satz der Öffnungen 37 bzw. 41 aufgenommen und durch das Arbeitsglied 13 in diesen gehalten.

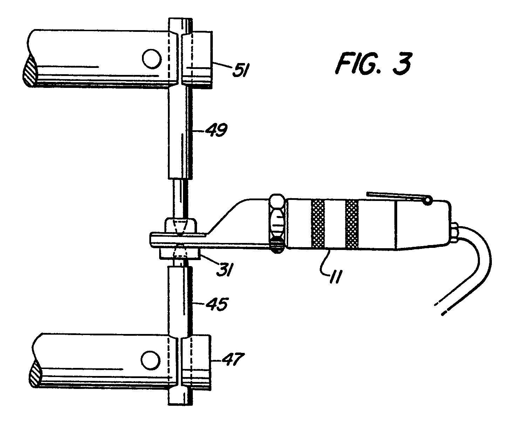

Aus Figur 3 geht hervor, daß die oberen und unteren Arme des Schweißapparates 47 bzw. 51 ihre Elektroden 45 und 49 jeweils so tragen, daß sie in den sich gegenüberliegenden Enden der Klingenhalter 31 aufgenommen werden und so nachbearbeitet werden können.

Patentansprüche

1. Nachbearbeitungsvorrichtung zum Nachbearbeiten der Spitzen von sich gegenüberliegenden und selektiv einstellbaren Elektroden in deren Einbaustellung in einer Schweißmaschine, mit einem vorderen Bearbeitungsabschnitt und einem rückwärtigen Antriebsabschnitt, bei der ein rotierend antreibbares Arbeitsglied in dem Bearbeitungsabschnitt angeordnet ist, g e k e n n z e i c h n e t durch ein Stütz- und Stabilisierungsglied (23), das am vorderen Betätigungsabschnitt befestigbar ist und eine Vertiefung (25) zur sicheren Aufnahme einer Elektrodenspitze aufweist, wobei das Glied (23) so montiert ist, daß die Vertiefung (25) und das antreibbare Arbeitsglied (13) gleichzeitig jeweils eine der beiden Elektrodenspitzen aufnehmen können.

2. Schneidklingenhalter für eine Nachbearbeitungsvorrichtung, der in einem antreibbaren Arbeitsglied der Vorrichtung aufnehmbar ist, g e k e n n z e i c h n e t durch ein Gehäuse (31) mit einer im wesentlichen zylindrischen Kammer (33), die an beiden Enden offen ist, wobei das Gehäuse (31) einen ersten Satz und einen zweiten Satz von in Querrichtung in Fluchtung stehenden Öffnungen (37 bzw. 41) aufweist, die in Längsrichtung im Abstand voneinander angeordnet sind und jeweils eine solche Gestalt aufweisen, daß sie eine quer durch die Kammer (33) ragende Schneidklinge (43) aufnehmen und deren Bewegung in Längsrichtung begrenzen können und wobei das Gehäuse von dem antreibbaren Arbeitsglied (13) aufnehmbar ist und sich durch dieses erstreckt, sowie durch Mittel zum Begrenzen der radialen Bewegungen der Schneidklingen (43).

1/2

FIG. 1

FIG. 2

2/2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 128 672 (N.E. O'CONNOR et al.) * Spalte 2, Zeilen 26-43; Figuren * | 1,2 | B 23 K 11/30 |
| | --- | | |
| X | US-A-3 283 662 (W. WEGLIN) * Spalte 2, Zeilen 20-30; Figur 2 * | 1,2 | |
| | --- | | |
| A | DE-B-1 174 438 (J.E. TAYLOR) * Figur 2 * | 1 | |
| | --- | | |
| A | DE-U-1 949 302 (H. FRICKE) * Ansprüche; Figuren * | 1,2 | |
| | ----- | | |

RECHERCHIERTE SACHGEBIETE (Int. Cl. ³)

B 23 K 11/00

Der vorliegende Recherchenbericht wurde für alle Patentansprüche erstellt.

| Recherchenort | Abschlußdatum der Recherche | Prüfer |
|---|---|---|
| BERLIN | 13-05-1983 | WUNDERLICH J E |